(19) Europäisches Patentamt
European Patent Office
Office européen des brevets

(11) EP 2 188 910 B1

(12) **EUROPEAN PATENT SPECIFICATION**

(45) Date of publication and mention of the grant of the patent:
**19.12.2012 Bulletin 2012/51**

(21) Application number: **08795235.4**

(22) Date of filing: **12.08.2008**

(51) Int Cl.:
***H04W 52/32*** *(2009.01)*

(86) International application number:
**PCT/US2008/009628**

(87) International publication number:
**WO 2009/023189 (19.02.2009 Gazette 2009/08)**

(54) **METHOD FOR CONTROL CHANNEL TRANSMISSION WITH PERSISTENT SCHEDULING**

VERFAHREN ZUR STEUERKANALÜBERTRAGUNG MIT DAUERHAFTER PLANUNG

PROCÉDÉ POUR UNE TRANSMISSION DE CANAL DE CONTRÔLE AVEC UNE PROGRAMMATION PERSISTANTE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.08.2007 US 964459 P**

(43) Date of publication of application:
**26.05.2010 Bulletin 2010/21**

(73) Proprietor: **Alcatel Lucent**
**75007 Paris (FR)**

(72) Inventors:
- **RAO, Anil, M. c/o Alcatel-Lucent USA Inc.**
  **Murray Hill, New Jersey 07974-0636 (US)**
- **SONI, Robert, Atmaram**
  **Randolph, NJ 07869 (US)**

(74) Representative: **Wetzel, Emmanuelle et al**
**Alcatel Lucent**
**Intellectual Property & Standards**
**70430 Stuttgart (DE)**

(56) References cited:
**EP-A- 1 758 275** **EP-A1- 2 120 370**
**WO-A-03/085878** **US-A1- 2003 039 217**

- **"Universal Mobile Telecommunications System (UMTS); Physical layer procedures (FDD) (3GPP TS 25.214 version 6.4.0 Release 6); ETSI TS 125 214" ETSI STANDARDS, LIS, SOPHIA ANTIPOLIS CEDEX, FRANCE, vol. 3-R1, no. V6.4.0, 1 December 2004 (2004-12-01), XP014027622 ISSN: 0000-0001**
- **"Persistent Scheduling for E-UTRA" 3GPP TSG-RAN WG1 MEETING AD HOC LTE HELSINKI (FINLAND), XX, XX, vol. R1-060099, 23 January 2006 (2006-01-23), pages 1-2, XP002490260**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 188 910 B1

Printed by Jouve, 75001 PARIS (FR)

## Description

### RELATED APPLICATION

This application claims priority pursuant to 35 U.S.C. Sec 119(e) to US Provisional Application No.60/964,459, filed August 13, 2007, entitled A METHOD OF MAINTAINING QUALITY OF SERVICE IN THE PRESENCE OF CONTROL CHANNEL SIGNALING.

### FIELD OF THE INVENTION

The invention is related to communication systems and more particularly to systems and methods for signaling and transmission of traffic in wireless communication systems.

### BACKGROUND OF THE INVENTION

In the relatively short history of cellular wireless communications, the service profile has advanced from analog, voice only service of early first generation systems to current third generation digital systems providing seamless voice and data services, including multimedia service. Continuing the technical advances, industry experts are now engaged in formulating architectures and protocols for fourth generation wireless systems that will be substantially data-centric -- voice services being primarily implemented using VoIP protocols. Long Term Evolution , or more commonly, "LTE," is under development as a fourth generation successor to the third generation service known as Universal Mobile Telephone Service, and will essentially provide a wireless broadband Internet system with voice and other services built on top.

As presently structured, a problem exists for maintaining the quality of service (QoS) for persistently scheduled data (such as VoIP) in the LTE reverse link, in the case where control information needs to be multiplexed together with the persistently scheduled data. Due to the single carrier nature of the LTE reverse link, when control information is multiplexed with data, it increases the code rate on the data channel which results in degraded QoS. With persistently scheduled data there is no signaling from the base station to the mobile which can be used to compensate for the reduction in QoS when control information is multiplexed with data.

In the art, US2003/0039217 A1 discloses a high-speed packet data communication system wherein control information and data are summed up in a summer, i.e. control information is transmitted together with data. In a similar way, WO 03/085878 A, "Universal Mobile Telecommunications System (UMTS); Physical layer procedures (FDD) (3GPP TS 25.214 version 6.4.0 Release 6) ETSI TS 125 214", ETSI Standards, LIS, Sophia Antipolis Cedex, France, vol. 3-R1, no. V6.4.0, 1 December 2004, as well as EP 1 758 275 A all disclose using a power offset for transmissions by UEs, wherein control information is transmitted together with data.

### SUMMARY OF INVENTION

A method is provided for multiplexing control information with persistently scheduled data in a spectrally efficient operation. The invention builds from the fact that, for a persistent data allocation application, it is known precisely what effect multiplexing control information together with the data will have - *i.e.,* the increase in code rate can be computed, and the improvement in SNR required for maintaining the same quality of service can be determined. From this, the invention operates to determine and send a power offset parameter in the message carrying the persistent data allocation from the base station to the mobile. The power offsets are related to the control information being sent, and specify the amount by which the mobile should increase its transmit power level when multiplexing particular control information together with the persistent data. The increased transmit power then operates to maintain the required QoS on the data channel.

In a particular embodiment of the invention, the power offsets are determined in respect to three cases of control information that are envisioned for transmission in the LTE reverse link. Those cases are ACK/NACK only, CQI only, and ACK/NACK + CQI only. The power offset parameters for each of these three cases are designated, respectively, $\Delta_{ACK/NACK}$, $\Delta_{CQI}$, and $\Delta_{ACKINACK+CQI}$.

### BRIEF DESCRIPTION OF THE FIGURES

Figure 1 provides a schematic illustration of a puncturing operation carried out by LTE for multiplexing control information with data on the reverse link

Figure 2 provides a schematic illustration of multiplexing control information with data on the LTE reverse link according to the invention.

Figure 3 provides an illustrative case for development of power offsets according to the method of the invention.

## DETAILED DESCRIPTION OF THE INVENTION

In the following description, for purposes of explanation and not limitation, specific details are set forth such as particular architectures, interfaces, techniques, etc., in order to provide a thorough understanding of the present invention. However, it will be apparent to those skilled in the art that teachings of the present invention may be practiced in other illustrative embodiments that depart from the specific details described herein. In some instances, detailed descriptions of well-known devices, circuits, and methods are omitted from this application so as not to obscure the description of the present invention with unnecessary detail.

The body of experts developing the fourth generation LTE service, Third Generation Partnership project (3GPP), has chosen single carrier frequency division multiple access (SC-FDMA) for the LTE reverse link. As a consequence, when control signaling needs to be transmitted from the mobile terminal to the base station at the same time that there is data to send, then the control signaling must be multiplexed together with the data through puncturing of the data information. This puncturing operation is schematically illustrated in Figure 1. Examples of control information which needs to be sent in the reverse link in LTE includes ACK/NACK information to support hybrid automatic repeat request (HARQ) in the forward link, and Channel Quality Indication (CQI) which provides information to the base station on the quality of the channel in the forward link. However, this action of puncturing the data symbols with control information increases the code rate on the data channel, which will reduce the quality of service (QoS) on the data channel (i.e. increases the error rate) if no action is taken to compensate for the puncturing.

In LTE the transmit power level, P (measured in dBm), at which the mobile transmits is determined by the following equation:

$$P = \min(\text{MobileMaxPower},\ 10*\log_{10}(\text{NumRB}) + I + \Gamma + PL + \Delta)$$

where MobileMaxPower (measured in dBm) is the maximum transmit power capability of the mobile, NumRB is the number of resource blocks assigned to the mobile by the base station (each resource block consisting of 180 kHz of bandwidth) and is sent in each scheduling grant to the mobile; 1 is the uplink interference level (measured in dBm) seen at the base station receiver; $\Gamma$ is the desired target SINR (signal to interference plus noise ratio, measured in dB); PL is the path loss (measured in dB) between the base station and the mobile (as measured by the mobile); and $\Delta$ is an additional power offset (measured in dB) that can be applied by the base station and is sent in the scheduling grant by the base station to the mobile.

In the case that the data transmission is scheduled by the base station, the base station can take action to compensate for the puncturing of the data through one of the following ways:

1. appropriately set the additional power offset $\Delta$ in the scheduling grant to compensate for the increase in code rate on the data channel; or
2. reduce the amount of data which is to be scheduled proportional to the amount of control channel signaling which is to be multiplexed, so that the code rate on the data channel is maintained.

However, not all new transmissions in the reverse link are accompanied by a scheduling grant from the base station. LTE has introduced the notion of "persistent scheduling" in which a higher layer message is sent to the mobile containing a persistent allocation of resource. The persistent allocation of resources informs the mobile that it may transmit with a particular transport block size and modulation in certain pre-defined locations in time and frequency. This mode of operation is expected to be used particularly for voice over IP (VoIP) users, as it is foreseen that a large number of VoIP users will be supported in LTE, and the control channel overhead for sending a scheduling grant for every voice packet would be too high. Given the lack of a scheduling grant in the case of persistent scheduling, the base station has no way to explicitly compensate for the reduction in QoS on the data channel that will occur when control information needs to be multiplexed with persistently scheduled data in the reverse link.

This problem has been addressed in the art by use of one of two mechanisms:

(1) configure the transmit power of the mobile to be high enough such that even when the largest amount of control channel information is multiplexed with scheduled data, the scheduled data will be able to meet the minimum QoS requirement; or

(2) send a dynamic scheduling grant which can specify an additional power offset to be used, every time there is control information that needs to be multiplexed with persistently scheduled data in the reverse link.

The disadvantage to (1) is that, during times when there is no control information to be sent (and thus no need to multiplex such control information with the data transmission stream), then the persistently scheduled data will be sent at a power level exceeding the QoS requirement (i.e. the data transmission will achieve a better error rate than required), which causes extra interference and hence reduces system capacity. In addition, since the power level has to be set to compensate for the reduction in QoS caused by the largest amount of control channel information; even the multiplexing of smaller amounts (than that maximum amount) of control information will result in the persistently scheduled data be exceeding the QoS requirement at the expense of extra interference being generated in the system.

The disadvantage to (2) is that control channel overhead in the forward link will be significantly increased if a dynamic scheduling grant needs to be sent every time control channel information needs to be multiplexed with persistently scheduled data. Thus, this approach also operates to reduce system performance.

Another limitation in the approach of the art is related to the format of the control channel signaling that is multiplexed with data in the reverse link. The current practice contemplates that the base station will choose the repetition factor to use on the uplink control channel, in order to get the proper error rate on the control channel. For example, for a one bit ACK/NACK indication on the control channel, the base station scheduler may decide that this bit needs to be repeated either 5 times or 10 times in order to get the correct error rate, given the current transmit power setting of the mobile. The base station must indicate the format of the control channel through some type of higher layer configuration message.

The inventors have determined that the limitations of the prior art can be overcome by the method of their invention as disclosed herein. According to the methodology of the invention, a message provided for transmission using persistent scheduling is adapted to also include power offset parameters as described herein. Such power offset parameters will be used by the mobile when control channel information needs to be multiplexed with data transmitted in a persistent allocation transmission. In particular, the method of the invention addresses three cases of control information that are envisioned for transmission in the LTE reverse link, with separate power offsets for each case. Those cases are:

1. ACK/NACK only
2. CQI only
3. ACK/NACK and CQI

Accordingly, three power offset values are provided for inclusion in the persistent allocation message, those three power offsets being denoted by $\Delta_{ACK/NACK}$, $\Delta_{CQI}$, and $\Delta_{ACKMACK+CQI}$. The appropriate one of these power offsets will be applied by the mobile when it needs to multiplex the corresponding control information together with data. The approach of the invention is illustrated schematically in Figure 2, which shows an additional power offset, $\Delta_{CONTROL}$, being applied to the nominal power level P to compensate for the puncturing of the data with the control information ($\Delta_{CONTROL}$ being used as a proxy for the appropriate one of the three power offsets described above - *i.e.*, $\Delta_{ACK/NACK}$, $\Delta_{CQI}$, or $\Delta_{ACK/NACK+CQI}$).

An exemplary case will help to illustrate the operation of the invention. Consider a VoIP service which has a transport block size of 300 information bits, and a persistent allocation of resources is assigned to a mobile with the VoIP service as follows: the mobile can transmit every 5ms using QPSK modulation with 2 resource blocks at time index *t* and frequency index *f*. In LTE, a resource block consists of 12 subcarriers and 14 OFDM symbols (12 of which can be used for data and 2 which are used for pilot), resulting in the mobile being allocated a total of 2* 12*12 = 288 symbols for data transmission every 5ms. With QPSK there are 2 bits per symbol, so the 288 symbols translates to 576 bits. Hence the mobile will perform channel coding and rate matching to fit into the 576 bits, and the code rate is: (300 information bits) /(576 bits) = 0.52.

Now assume the case that the mobile needs to transmit control information such as CQI together with the VoIP packet, and that the control information contains a total of 120 bits, also to be sent with QPSK modulation. Illustratively, the 120 bit total might arise from 20 coded bits for the CQI together with a repetition factor of 6 (as previously described, the base station chooses the repetition factor in order to get the proper error rate for the CQI). Then, with puncturing the persistent allocation data block to replace 120 bits of data with the 120 control bits, the code rate on the data channel is changed to be 300 information bits / (576-120) = 0.66. The increase in code rate means that a higher SNR (signal-to-noise ratio) is required in order to maintain the same error rate *(i.e.* 1% error rate). Accordingly, if the mobile is using the same power level as it was using in the case where the data was not punctured with control information (code rate 0.52), then the error rate on the VoIP traffic will be increased. This undesirable result is avoided by the invention through selecting and applying the $\Delta_{CQI}$ power offset to cause the mobile to increase its transmit power level. This incremental power increase will increase the SNR so as to compensate for the increase in code rate due to the puncturing from the control information.

As will be apparent to those of skill in the art, one can compute precisely what the increase in code rate will be for the different control channel multiplexing scenarios (i.e., ACK/NACK, CQI, or ACK/NACK + CQI). This is illustrated for the exemplary case here in Figure 3, which shows that a power offset of $\Delta_{CQI}$ = 1.3 dB will allow the error rate to be maintained at 1% when the code rate increases from 0.52 to 0.66.

Thus, according to the method of the invention, for a given persistent allocation of resources, one can determine and send the appropriate power offset values together with the persistent allocation that will enable the mobile to maintain the desired quality of service even in the presence of control channel multiplexing with the persistently scheduled data.

It is further to be noted that by signaling an additional power offset for the mobile to use according to the invention, the error rate on the control channel that is multiplexed together with the data will also be improved. For the exemplary case above, where a repetition factor of 6 was chosen for the CQI control information, it may be that with the additional power offset of $\Delta_{CQI}$ = 1.3 dB, the repetition factor on the CQI could be reduced (for example from a repetition factor of 6 to 5), resulting in a reduction in the number of bits for CQI from 120 to 100. In this case the code rate on the data channel only gets reduced to 300/(576-100) = 0.63. Then one can again iterate and choose a lower power offset $\Delta_{CQI}$ as the code rate impact is smaller, as long as the error rate on the CQI with a repetition factor of 5 still meets the error rate requirement with the reduced power offset.

Herein, the inventors have disclosed a method and system for implementing a substantial improvement in the transmission of control data for persistently scheduled transmissions through the use of specified power offsets associated with the transmission of particular control data. Numerous modifications and alternative embodiments of the invention will be apparent to those skilled in the art in view of the foregoing description.

Accordingly, this description is to be construed as illustrative only and is for the purpose of teaching those skilled in the art the best mode of carrying out the invention and is not intended to illustrate all possible forms thereof.

## Claims

1. A method for operating a wireless communication system comprising the steps of:

   determining a power offset to be used by a mobile unit in the wireless system for transmission of control information multiplexed with persistently scheduled data; and
   signaling the power offset from a base station to the mobile unit.

2. The method of claim 1 where the data to be transmitted by the mobile unit is persistently scheduled by the base station.

3. The method of claim 2 where the signaled power offset is carried in a message from the base station carrying the persistent scheduling.

4. The method of claim 1 where the control information corresponds to ACK/NACK, CQI, or ACK/NACK + CQI.

5. The method of claim 1 where the power offset is determined as an incremental increase in transmission power for the mobile unit needed to improve an SNR at the base station with transmission of the control information multiplexed with data, such that the same quality of service is maintained for the mobile transmission as for the transmission of only data at a power transmission level in use prior to application of the power offset.

6. The method of claim 1 where a repetition factor of the control information is modified as a function of the power offset.

## Patentansprüche

1. Verfahren zum Betreiber eines drahtlosen Kommunikationssystems, die folgenden Schritte umfassend:

   Bestimmen eines von einer mobilen Einheit in einem drahtlosen System für die Übertragung von mit dauerhaft geplanten Daten gemultiplexten Steuerungsinformationen zu verwendenden Leistungs-Offsets, und Signalisieren des Leistungs-Offsets von einer Basisstation an die mobile Einheit.

2. Verfahren nach Anspruch 1, wobei die von der mobilen Einheit zu übertragenden Daten dauerhaft von der Basisstation geplant werden.

3. Verfahren nach Anspruch 2, wobei der signalisierte Leistungs-Offset in einer Nachricht von der Basisstation, welche die dauerhafte Planung enthält, transportiert wird.

4. Verfahren nach Anspruch 1, wobei die Steuerungsinformationen ACK/NACK, CQI oder ACK/NACK + CQI entsprechen.

5. Verfahren nach Anspruch 1, wobei der Leistungs-Offset als eine inkremental Erhöhung in der Übertragungsteistung für die mobile Einheit, welche erforderlich ist, um ein SNR an der Basisstation zu verbessern, mit der Übertragung der mit Daten gemultiplexten Steuerungsinformationen derart bestimmt wird, dass dieselbe Dienstgüte für die mobile Übertragung wie für die Übertragung lediglich von Daten mit einem vor der Anwendung des Leistungs-Offsets verwendeten Übertragungsteistungspegel beibehalten wird.

6. Verfahren nach Anspruch 1, wobei ein Wiederholungsfaktor der Steuerungsinformationen in Abhängigkeit von dem Leistungs-Offset modifiziert wird.

**Revendications**

1. Procédé d'utilisation d'un système de communication sans fil comprenant les étapes suivantes :

   déterminer une décalage de puissance à utiliser par une unité mobile dans le système sans fil pour la transmission d'informations de commande multiplexées avec des données programmées de manière persistante ; et signaler le décalage de puissance d'une station de base à l'unité mobile.

2. Procédé selon la revendication 1, dans lequel les données à transmettre par l'unité mobile sont programmées de manière persistante par la station de base.

3. Procédé selon la revendication 2, dans lequel le décalage de puissance signalé est acheminé dans un message depuis la station de base transportant la programmation persistante.

4. Procédé selon la revendication 1, dans lequel les informations de commande correspondent à ACK/NACK, CQI, ou ACKJNACK + CQI.

5. Procédé selon la revendication 1, dans lequel le décalage de puissance est déterminé comme une augmentation incrémentale de la puissance de transmission pour l'unité mobile, nécessaire pour améliorer un SUR au niveau de la station de base, avec la transmission des informations de commande multiplexées avec les données, de sorte que la qualité de service maintenue pour la transmission mobile soit identique à celle de la transmission des données uniquement au niveau de transmission de puissance utilisé avant l'application du décalage de puissance.

6. Procédé selon la revendication 1, dans lequel un facteur de répétition des informations de commande est modifié en fonction du décalage de puissance.

FIG. 1

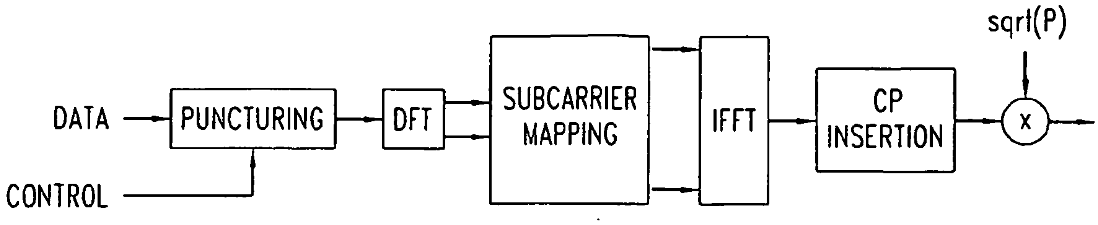


FIG. 2

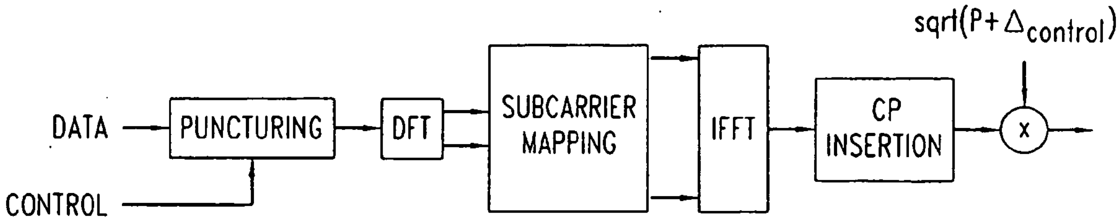


FIG. 3

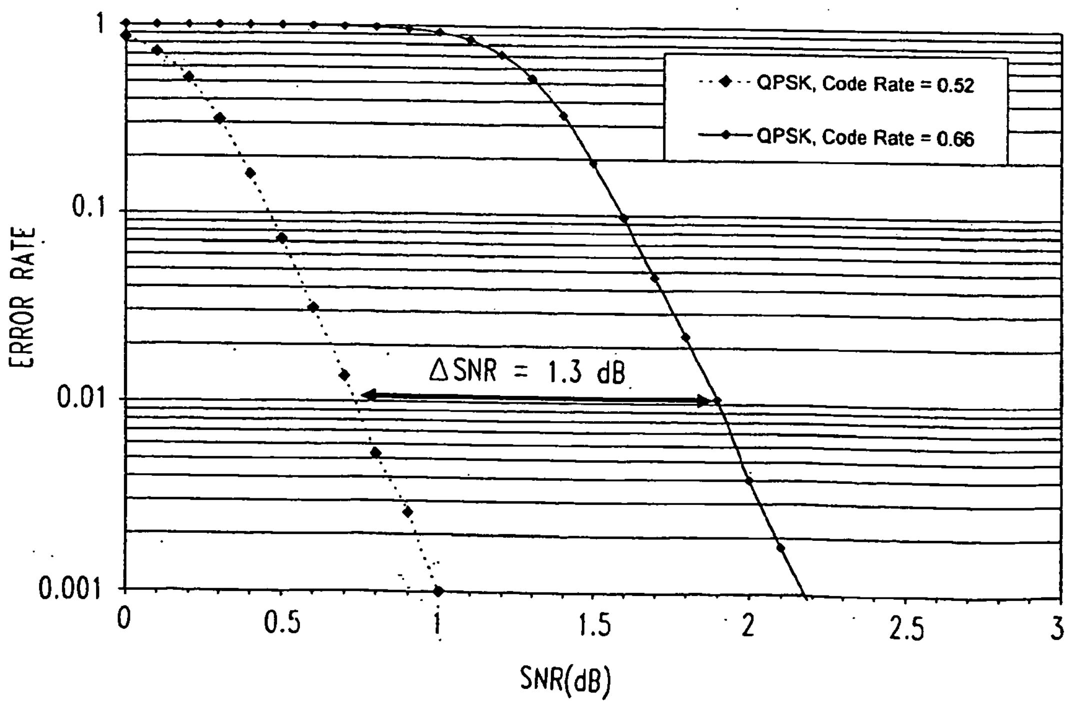

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 60964459 B
- US 20030039217 A1
- WO 03085878 A
- EP 1758275 A